# EUROPÄISCHE PATENTSCHRIFT

(11) **EP 1 983 328 B1**
(45) Veröffentlichungstag und Bekanntmachung des Hinweises auf die Patenterteilung: **17.02.2010**
(21) Anmeldenummer: 07008059.3
(22) Anmeldetag: 20.04.2007
(51) Int. Cl.: G01N 21/53

(54) **Rückwärtsstreuung mit Hintergrundausblendung**
Backscattering with background cancellation
Rétro-diffusion avec effacement du fond

(43) Veröffentlichungstag der Anmeldung: 22.10.2008
(73) Patentinhaber: SICK Engineering GmbH, 01458 Ottendorf-Okrilla (DE)
(72) Erfinder: Melcher, Uwe, 01458 Ottendorf-Okrilla (DE)
(74) Vertreter: Ludewigt, Christoph

(56) Entgegenhaltungen:
- CH-A5- 600 456
- DE-A1- 4 326 170
- US-A1- 2005 219 526
- US-A1- 2006 028 641

## Beschreibung

Die Erfindung betrifft eine Messvorrichtung zur Bestimmung einer Partikelkonzentration innerhalb eines Messbereichs nach dem Oberbegriff des Anspruchs 1. Des Weiteren ist ein Verfahren zum Betrieb einer Messvorrichtung zur Bestimmung einer Partikelkonzentration aufgezeigt.

Optische Messvorrichtungen zur Bestimmung der Partikelkonzentration werden dazu eingesetzt, um die Konzentration von Partikeln (Aerosolen, Staubteilchen, usw.) in Abluftkanälen bzw. in der Atmosphäre festzustellen. Dadurch ist es möglich, zum Beispiel den Rußpartikelausstoß in einem Kamin zu ermitteln. Weiterhin werden derartige optische Messvorrichtungen im Straßenverkehr, in der Schifffahrt oder der Luftfahrt eingesetzt, um gegebenenfalls ein Warnsignal beim Unterschreiten einer definierten Sichtweite auszugeben.

Optische Messvorrichtungen zur Bestimmung der Partikelkonzentration arbeiten dabei entweder nach dem Transmissionsprinzip oder nach dem Streulichtprinzip. Bei der Messung nach dem Transmissionsprinzip sendet ein Lichtsender ein definiertes Lichtbündel aus der Messvorrichtung in einen Messbereich aus. Am gegenüberliegenden Ende des Messbereichs ist ein Reflektor angeordnet, der das Lichtbündel erneut durch den Messbereich zu seinem Ausgangsort zurückwirft. In unmittelbarer Nähe des Lichtsenders ist in der Messvorrichtung eine Messeinheit angeordnet, mit der die ankommende Lichtmenge erfasst wird. Befinden sich keine Partikel in dem Messbereich, wird das ausgesandte Lichtbündel nicht gedämpft, d. h. die von der Messeinheit erfasste maximale Lichtmenge wird einem Transmissionswert von 100 % zugeordnet. Aus dem mathematischen Zusammenhang zwischen der Länge des Lichtwegs und dem in der Messeinheit gemessenen Transmissionswert kann somit die Staubmenge pro Wegstrecke ermittelt werden.

Bei der Messung der Partikelkonzentration, die nach dem Prinzip der Streulichtmessung arbeitet, sind in einer Messvorrichtung ebenfalls ein Lichtsender und eine Messeinheit angebracht. Der Lichtsender und die Messeinheit sind in der Messvorrichtung so angebracht, dass sich das vom Lichtsender ausgesandte Lichtbündel und das von der Messeinheit aufgenommene Lichtbündel innerhalb des Messbereichs überschneiden. Dadurch wird bei der Streulichtmessung nur dann Licht zur Messeinheit gelangen, wenn zumindest Teile des ausgesandten Lichtbündels an einem Partikel innerhalb des Messbereichs zurückgestreut werden. Bei diesem Prinzip der rückwärtsgestreuten Messung (Backscatter-Prinzip) gelangt somit eine der Partikelhäufigkeit proportionale Lichtmenge zur Messeinheit, so dass damit die Ermittlung der Staubkonzentration möglich ist. Die Menge der dabei zur Messeinheit bzw. auf einen in der Messeinheit eingebauten Messempfänger treffende Lichtmenge ist bei der Streulichtmessung jedoch sehr gering. Mit anderen Worten, die auf dem Messempfänger auftreffende Lichtmenge ist typischerweise um mehrere Größenordnungen (Faktor 10⁻¹²) kleiner als die Lichtmenge, die im ausgesendeten Lichtbündel vorhanden ist.

Der Begriff "Licht" ist dabei nicht auf das sichtbare Licht beschränkt. Unter "Licht" sind hier alle elektromagnetischen Strahlen vom UV-Bereich bis in den IR-Bereich zu verstehen, die zur Messung der Partikelkonzentration nach dem Streulichtprinzip verwendet werden können.

Aufgrund der Gegebenheit, dass bei der Streulichtmessung nur ein sehr kleiner Anteil der ausgesendeten Lichtmenge zur Partikelkonzentrationsmessung ausgewertet werden muss, ist es wichtig, dass der Messempfänger lediglich von dem zu messenden Streulicht und nicht von sonstigem Störlicht beaufschlagt wird. Der hauptsächliche Grund für das Auftreten eines Störlichts wird von einer Hintergrundstrahlung verursacht, die dadurch hervorgerufen wird, dass das vom Lichtsender ausgesandte Lichtbündel an einer hinter dem Messbereich liegenden Hintergrundebene reflektiert wird. Diese Hintergrundebene ist somit meist die Innenwand von einem, einen Staub- bzw. Gasstrom führenden Kanal. Durch diese primäre Reflexion des auftreffenden Lichtbündels an der Hintergrundebene werden weitere Streureflexionen innerhalb des Staub- bzw. Gaskanals ausgelöst, die dann auch in eine dem Messempfänger zugeordnete Messlichtkeule eindringen können. Aus diesem Grund ist es nach dem Stand der Technik bekannt, an dem Auftreffort des einfallenden Lichtbündels, in der Hintergrundebene eine Lichtfalle anzubringen. Es ist weiterhin bekannt, auch die Fläche auf der Hintergrundebene, auf die die Messlichtkeule des Messempfängers ausgerichtet ist, ebenfalls mit einer Lichtfalle zu belegen. Unter dem Begriff einer Lichtfalle sollen alle Maßnahmen zusammengefasst sein, die geeignet sind, die Reflexion des auftreffenden Lichts weitgehend zu reduzieren. Insbesondere sind dies Lichttuben, Blenden, spezielle Oberflächenstrukturen, Beschichtungen, usw. Diese, die Hintergrundreflexion reduzierenden Vorkehrungen, können jedoch nur dann durchgeführt werden, wenn der Zugang zu den entsprechenden Stellen im Staub- bzw. Gaskanal möglich ist. Darüber hinaus ist es notwendig, dass für derartige Maßnahmen ein zusätzliches Platzangebot zur Verfügung gestellt wird, was oft in den Anlagen nicht oder nur mit großem Aufwand realisiert werden kann. Des Weiteren sind der notwendige Montageaufwand und die zwangsläufig damit verbundenen zusätzlichen Kosten von Nachteil. Aufgrund der notwendigen Empfindlichkeit des Empfängers unterdrückt auch eine Lichtfalle störende Streureflexionen im Hintergrund nicht ausreichend.

Aus der CH 600 456 ist ein Streustrahlungsdetektor bekannt, der zwei Strahlungsempfangselemente aufweist. Dabei erfasst das eine Streustrahlungselement zumindest teilweise die Streustrahlung eines gerichteten Strahlenbündels einer Strahlenquelle, während das andere dieses Strahlenbündel nicht berührt. Eine Auswertungsschaltung vergleicht die derart empfangenen Strahlungen, welche somit Störstrahlung von einem wenigstens annähernd gleichen Hintergrund aufnehmen.

Die US2006/0028641 A1 beschreibt eine Vorrichtung zur orthogonalen Ausrichtung eines Abbildungssystems zu einer Probe. Dabei ist es möglich, eine Probe mit einem Laser anstelle einer üblichen Arbeitslichtquelle zu beleuchten, indem ein Spiegel in den Beleuchtungspfad eingekoppelt wird, welcher die Arbeitslichtquelle blockiert und das Laserlicht auf die Probe lenkt.

Der Erfindung liegt deshalb die Aufgabe zugrunde, eine Messvorrichtung zu schaffen, die komfortabler in Aufbau und Wartung ist. Dabei kann die Messvorrichtung zur Bestimmung einer Partikelkonzentration nach dem Rückwärtsstreulichtprinzip ohne zusätzliche Lichtfallen in der Hintergrundebene betrieben werden. Die Installation der Messvorrichtung soll dadurch, dass nur noch von einer Seite in den Staub- bzw. Gaskanal eingegriffen wird, wesentlich vereinfacht werden. Darüber hinaus ist der Raumbedarf zum Anbau der Messvorrichtung gering zu halten, so dass die Messvorrichtung zum Beispiel auch an kleinen Staub- bzw. Gaskanälen problemlos angebracht werden kann.

Diese Aufgabe wird gelöst durch eine Vorrichtung und/oder Verfahren mit den Merkmalen der unabhängigen Ansprüche. Danach sieht die Erfindung vor, dass in der Messvorrichtung neben einem Lichtsender zum Aussenden von einem Lichtbündel in den Messbereich sowie einer Messeinheit mit einer Messlichtkeule und einem Messempfänger zum Empfang der Lichtanteile, die an den Partikeln im Messbereich zurückgestreut werden, erfindungsgemäß noch eine, in unmittelbarer Nähe zur Messeinheit angeordnete, zusätzliche optische Kontrolleinheit mit einem Kontrollempfänger zur Erfassung der Hintergrundstrahlung vorhanden ist. Die Kontrolleinheit ist mit einem Kontrollempfänger ausgestattet, der das Licht, das sich innerhalb einer Kontrolllichtkeule auf die Kontrolleinheit zubewegt, erfasst. Gemäß der Erfindung ist dabei die Kontrolllichtkeule der Kontrolleinheit so zur Messeinheit ausgerichtet, dass sich der Querschnitt der Kontrolllichtkeule und der Querschnitt der Messlichtkeule in einer hinter dem Messbereich liegenden Hintergrundebene zumindest teilweise überschneiden. Darüber hinaus ist die Kontrolllichtkeule so angeordnet, dass sie sich mit dem vom Lichtsender ausgesandten Lichtbündel im gesamten Strahlverlauf nicht überdeckt. Mit dieser Anordnung wird erreicht, dass der Kontrollempfänger nur die Hintergrundstrahlung empfangen kann. Dadurch ist es möglich, aus der erfassten Lichtmenge auf dem Messempfänger den Anteil der Hintergrundstrahlung zu eliminieren, so dass nur noch der von den Partikeln im Messbereich verursachte Wert der Streulichtmessung ermittelbar ist.

Eine besonders vorteilhafte Ausführungsform der Erfindung ist durch den Anspruch 2 gekennzeichnet. Danach ist es vorgesehen, dass in der Messvorrichtung eine Gelenkhalterung vorhanden ist, mit der die Kontrolleinheit mit veränderbarer Winkelausrichtung in der Messvorrichtung befestigt ist. Dadurch ist es möglich, dass die Kontrolleinheit und die Messeinheit exakt auf denselben Ausschnitt auf der Hintergrundebene ausgerichtet sind. Dies ist insbesondere bei einem Hintergrund mit inhomogener Reflexionseigenschaft notwendig, weil nur damit in der Kontrolleinheit und der Messeinheit die gleiche Hintergrundstrahlung gemessen wird und eine optimale Kompensation des Einflusses der Hintergrundstrahlung erzielbar ist. Darüber hinaus kann mit dieser Gelenkhalterung der Überschneidungsgrad von der Kontrolllichtkeule mit der Messlichtkeule auch bei unterschiedlichen Entfernungen zwischen der Hintergrundebene und der Messvorrichtung eingestellt werden. In einer bevorzugten praktischen Ausführungsform ist an der Gelenkhalterung, mit der die Kontrolleinheit in der Messvorrichtung befestigt wird, eine Einstellskalierung angebracht. Erfindungsgemäß ist die Skalierung so ausgeführt, dass die Angabe nicht in Winkelgraden sondern in Abstandseinheiten ausgeführt ist. Damit kann die Kontrolleinheit bei Kenntnis der Entfernung zwischen der Messvorrichtung und der Hintergrundebene leicht eingestellt werden.

Nach einer weiteren vorteilhaften Ausgestaltung sind an der Kontrolleinheit und der Messeinheit jeweils ein zu der Kontrolllichtkeule beziehungsweise der Messlichtkeule ausgerichteter Laserpointer angebracht. Mit dem Laserpointer ist es sehr leicht möglich, sowohl die Messlichtkeule als auch die Kontrolllichtkeule auf einen gezielten Punkt in der Hintergrundebene auszurichten.

Eine besonders vorteilhafte Hilfe zur Justage der Messvorrichtung bei der Inbetriebnahme oder bei Servicearbeiten wird erfindungsgemäß dadurch erreicht, dass in der Messeinheit und in der Kontrolleinheit eine Wechselvorrichtung eingebaut ist, mit der der Messempfänger und der Kontrollempfänger jeweils gegen eine Justierlichtquelle ausgetauscht werden können. Mit diesem Tausch wird die Eigenschaft der Kontrolllichtkeule und der Messlichtkeule von einer Lichtempfangsfunktion in eine Lichtsendefunktion geändert und damit wird der wirksame Strahlquerschnitt der Kontrolllichtkeule und der Messlichtkeule für das menschliche Auge sichtbar. Die Justage und der Einbau der Messvorrichtung in den Staub- bzw. Gaskanal als auch die Ausrichtung der Kontrolleinheit innerhalb der Messvorrichtung werden damit wesentlich vereinfacht.

Zur Vermeidung von toleranzbedingten Justagefehlern, die beim Austausch des Messempfängers und des Kontrollempfängers gegen die Justierlichtquellen in der Wechselvorrichtung auftreten können, ist es nach der Erfindung vorgesehen, dass vor dem Messempfänger und vor dem Kontrollempfänger eine feststehende Feldblende angeordnet ist. Die Position dieser Feldblende wird beim Tausch der Empfänger mit den Justierlichtquellen nicht verändert. Mit dem Einsatz dieser feststehenden Feldblenden wird die Geometrie der Kontrolllichtkeule und der Messlichtkeule, d. h. deren Größe und Ausrichtung, bei einem Tausch der Empfänger gegen die Justierlichtquelle auch dann unverändert erhalten bleiben, wenn die jeweilige Justierlichtquelle durch die Wechselvorrichtung nicht exakt am Ort des jeweiligen Empfängers positioniert wird.

Die Erfindung bezieht sich auch auf ein Verfahren zur Bestimmung einer Partikelkonzentration innerhalb eines Messbereichs nach dem Rückwärtsstreulichtprinzip mit einer Messvorrichtung, bei der mit einer zusätzlichen optischen Kontrolleinheit die Größe der Hintergrundstrahlung, die dem Messwert zur Partikelkonzentration überlagert ist, gemessen werden kann. Damit ist es in einer Auswerteeinheit möglich, den durch die Hintergrundstrahlung verursachten Messfehler zu korrigieren, wie dies bereits im Zusammenhang mit der erfindungsgemäßen Messvorrichtung erläutert worden ist.

Im Folgenden wird die Erfindung beispielsweise unter Bezugnahme auf die Zeichnung im Einzelnen beschrieben.

In der Zeichnung zeigt:
- Fig. 1: eine schematische Schnittdarstellung einer nach dem Stand der Technik gekannten Messvorrichtung, bei der die Bestimmung einer Partikelkonzentration innerhalb eines Messbereichs nach dem Rückwärtsstreulichtprinzip durchgeführt wird.
- Fig. 2: eine schematische, perspektivische Darstellung einer Messvorrichtung, mit einer zusätzlichen optischen Kontrolleinheit zur Erfassung der Hintergrundstrahlung.
- Fig. 3: eine schematische, perspektivische Darstellung einer Messvorrichtung, mit einer Gelenkhalterung zur Befestigung der zusätzlichen optischen Kontrolleinheit in der Messvorrichtung.
- Fig. 4: eine schematische, perspektivische Darstellung einer Messvorrichtung, mit jeweils einem angebauten Laserpointer.
- Fig. 5a: eine schematische Querschnittsansicht von einer, in der erfindungsgemäßen Messvorrichtung eingebauten Wechselvorrichtung, während des Messbetriebs.
- Fig. 5b: eine schematische Querschnittsansicht von einer, in der erfindungsgemäßen Messvorrichtung eingebauten Wechselvorrichtung, im Zustand der Ausrichtung.

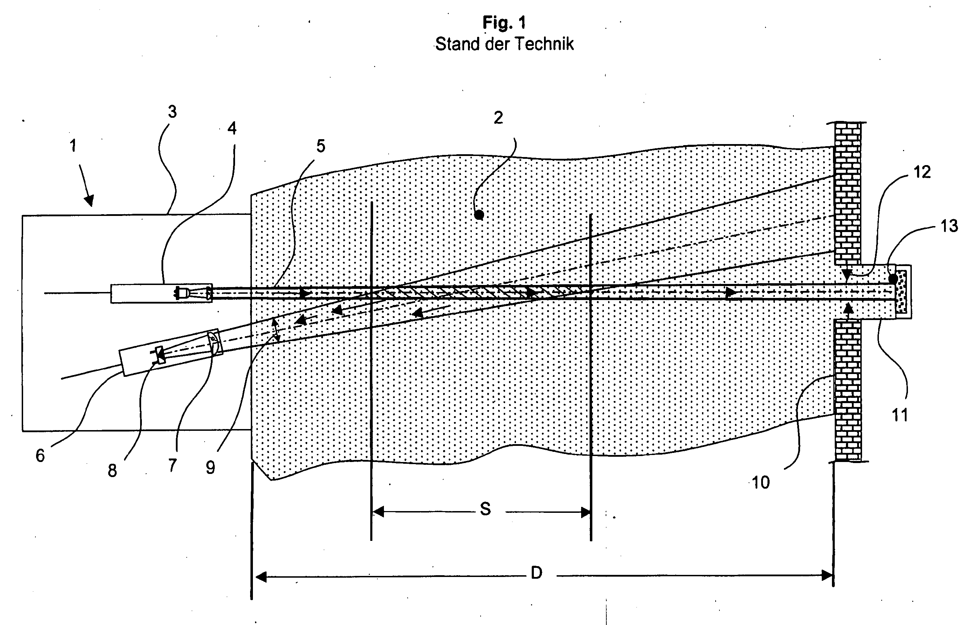

In Figur 1 ist eine schematische Schnittdarstellung einer nach dem Stand der Technik gekannten Messvorrichtung 1 zur Bestimmung einer Partikelkonzentration innerhalb eines Messbereichs 2 nach dem Rückwärtsstreulichtprinzip gezeigt. Dabei ist in einem Gehäuse 3 ein Lichtsender 4 dargestellt, der ein Lichtbündel 5 in Richtung des Messbereichs 2 aussendet. Weiterhin ist im Gehäuse 3 eine Messeinheit 6 angeordnet, bei der hinter einem Objektiv 7 ein Messempfänger 8 angeordnet ist. Die Messeinheit 6 ist so ausgeführt, dass der Messempfänger 8 die innerhalb einer Messlichtkeule 9 ankommende Lichtstrahlung erfassen und in ein dieser Lichtmenge proportionales, elektrisches Signal umwandeln kann. Das Lichtbündel 5 und die Messlichtkeule 9 sind innerhalb der Messvorrichtung 1 so zueinander ausgerichtet, dass sich das Lichtbündel 5 und die Messlichtkeule 9 innerhalb des Messbereichs 2 in einem Schnittbereich S überkreuzen. Werden Partikel innerhalb des Schnittbereichs S von dem Lichtbündel 5 getroffen, so werden Anteile des an den Partikel zurückgestreuten Lichts in der Messeinheit 6 detektiert. Darüber ist dann eine Bestimmung einer Partikelkonzentration möglich. In einem Abstand D von der Messvorrichtung 1 ist der Messbereich 2 durch eine Hintergrundebene 10 begrenzt. Wenn die Messvorrichtung 1 zur Messung der Partikelkonzentration in einem Staub- bzw. Gaskanal eingesetzt wird, ist die der Messvorrichtung 1 gegenüberliegende Innenwand des Staub- bzw. Gaskanals die Hintergrundebene 10. Wie ebenfalls aus der Figur 1 ersichtlich, ist in der Hintergrundebene 10 am Auftreffort des Lichtbündels 5 eine nach dem Stand der Technik bekannte Lichtfalle 11 vorhanden. In dieser Lichtfalle 11 ist beispielsweise eine Blende 12 eingebaut und darüber hinaus ist eine sehr gering reflektierende Oberfläche 13 dem Lichtbündel 5 zugewandt. Damit soll erreicht werden, dass von der Hintergrundebene 10 kein Licht aus dem Lichtbündel 5 in den Messbereich 2 zurückgestreut wird und damit auf dem Messlichtempfänger 8 auch keine, den Messwert verfälschende Hintergrundstrahlung auftrifft.

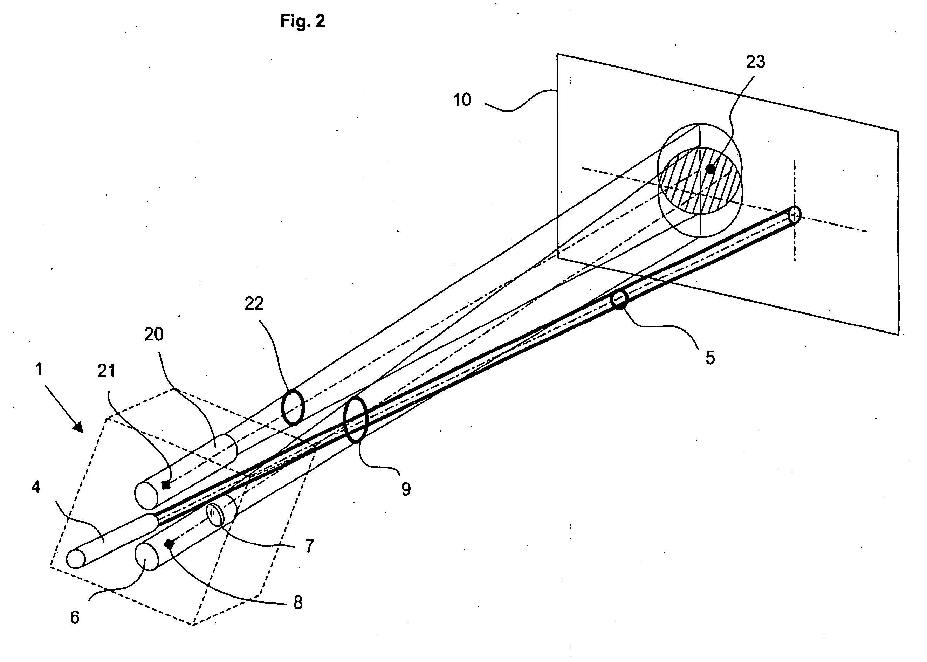

In Figur 2 ist in einer schematischen, perspektivischen Darstellung eine Messvorrichtung 1 gezeigt, bei der eine zusätzliche optische Kontrolleinheit 20 eingebaut ist. In dieser Kontrolleinheit 20 ist hinter einem nicht dargestellten Objektiv ein Kontrollempfänger 21 eingebaut, der das Licht, das innerhalb einer Kontrolllichtkeule 22 auf die Kontrolleinheit 20 auftrifft, erfasst. Die Kontrolleinheit 20 ist in der Messvorrichtung 1 so ausgerichtet, dass sich der Querschnitt der Kontrolllichtkeule 22 und das Lichtbündel 5 im gesamten Strahlverlauf nicht überdecken. Dadurch kann kein Licht von dem Lichtbündel 5, das an einem Partikel im Messbereich 2 zurückgestreut wird, zum Kontrollempfänger 21 gelangen. Gleichzeitig ist die Kontrolllichtkeule 22 in der Messvorrichtung 1 so ausgerichtet, dass sich der Querschnitt der Kontrolllichtkeule 22 und der Querschnitt der Messlichtkeule 9 auf der Hintergrundebene 10 in einem Überdeckungsbereich 23 zumindest teilweise überschneiden. Der in der Kontrolleinheit 20 eingebaute Kontrollempfänger 21 ist somit in der Lage, ausschließlich die Größe der Hintergrundstrahlung zu erfassen. Damit kann in einer hier nicht dargestellten Auswerteeinheit aus der auf dem Messempfänger 8 gemessen Messgröße die entsprechende Hintergrundstrahlung herausgerechnet werden. Es ist somit nachvollziehbar, dass eine wie in Figur 1 gezeigte Lichtfalle 11 zur Vermeidung von Hintergrundstrahlung nicht mehr erforderlich ist, weil der Einfluss der Hintergrundstrahlung mit dem Messwert aus der zusätzlichen optischen Kontrolleinheit 20 eliminiert werden kann.

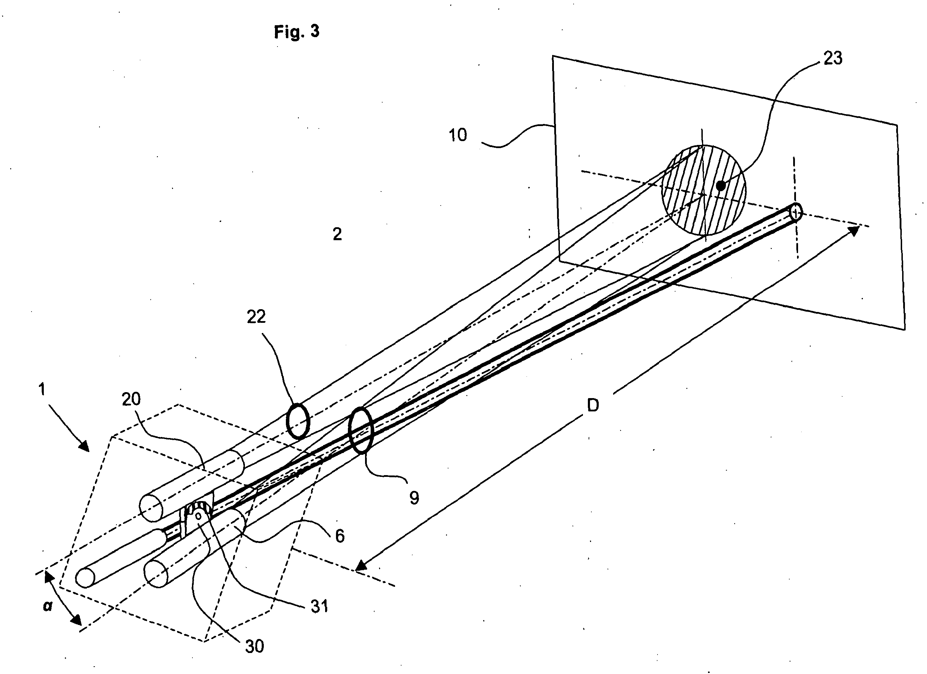

Aus der Zeichnung in Figur 3 ist zu erkennen, dass die Kontrolleinheit 20 mittels einer Gelenkhalterung 30 in der Messvorrichtung 1 befestigt sein kann. Damit ist es möglich, die Kontrolleinheit 20 beziehungsweise die Kontrolllichtkeule 22 um einen Winkel α bezogen auf die Messeinheit 6 zu verkippen. Diese veränderbare Winkelausrichtung hat den Vorteil, dass auch bei unterschiedlich großem Abstand D der Hintergrundebene 10 von der Messvorrichtung 1 ein optimaler Überdeckungsbereich 23 von dem Querschnitt der Kontrolllichtkeule 22 und dem Querschnitt der Messlichtkeule 9 auf der Hintergrundebene 10 eingestellt werden kann. Dadurch wird erreicht, dass mit der Messeinheit 6 und der Kontrolleinheit 20 die gleiche Menge an Hintergrundstrahlung erfasst wird. Dies ermöglicht eine optimale Korrektur der Auswirkung durch die Hintergrundstrahlung bei der Berechnung der Partikelkonzentration. Eine Erleichterung bei der Ausrichtung der Kontrolllichtkeule 22 auf die Messlichtkeule 9 wird mit einer an der Gelenkhalterung 30 angebrachten Einstellskalierung 31 erreicht. Insbesondere dann, wenn die Maßeinheit der Einstellskalierung 31 nicht in Winkelgraden sondern in Längeneinheiten, die dem Abstand D der Hintergrundebene 10 zur Messvorrichtung 1 entsprechen, ausgeführt ist, kann die Ausrichtung sehr einfach durchgeführt werden.

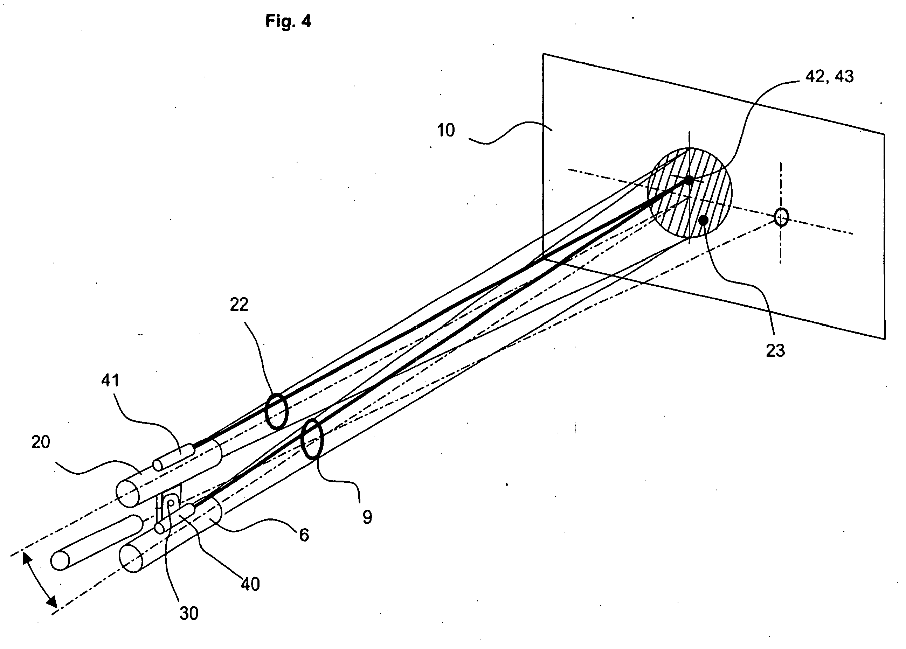

Eine besonders wirksame Hilfe zur exakten Ausrichtung der Kontrolllichtkeule 22 auf die Messlichtkeule 9 ist in Figur 4 gezeigt. An der Messeinheit 6 und der Kontrolleinheit 20 ist jeweils ein zu der Messlichtkeule 9 beziehungsweise zu der Kontrolllichtkeule 22 justierter Laserpointer 40, 41 angebracht. Wird der an der Messeinheit 6 angebrachte Laserpointer 40 aktiviert, so wird auf der Hintergrundebene 10 ein Lichtspot 42 erzeugt. Die Kontrolllichtkeule 22 kann nun mittels der Gelenkhalterung 30 so gekippt werden, dass ein vom Laserpointer 41 erzeugter Lichtspot 43 auf der Hintergrundebene 10 exakt über dem Lichtspot 42 zu liegen kommt. Nach erfolgter Ausrichtung der Kontrolllichtkeule 22 auf die Messlichtkeule 9 werden die Laserpointer 40, 41 wieder außer Betrieb gesetzt.

In der Messvorrichtung der Erfindung ist zum Zwecke der Ausrichtung der Kontrolllichtkeule 22 auf die Messlichtkeule 9 in der Messeinheit 6 und der Kontrolleinheit 20 jeweils eine Wechselvorrichtung 50 eingebaut.

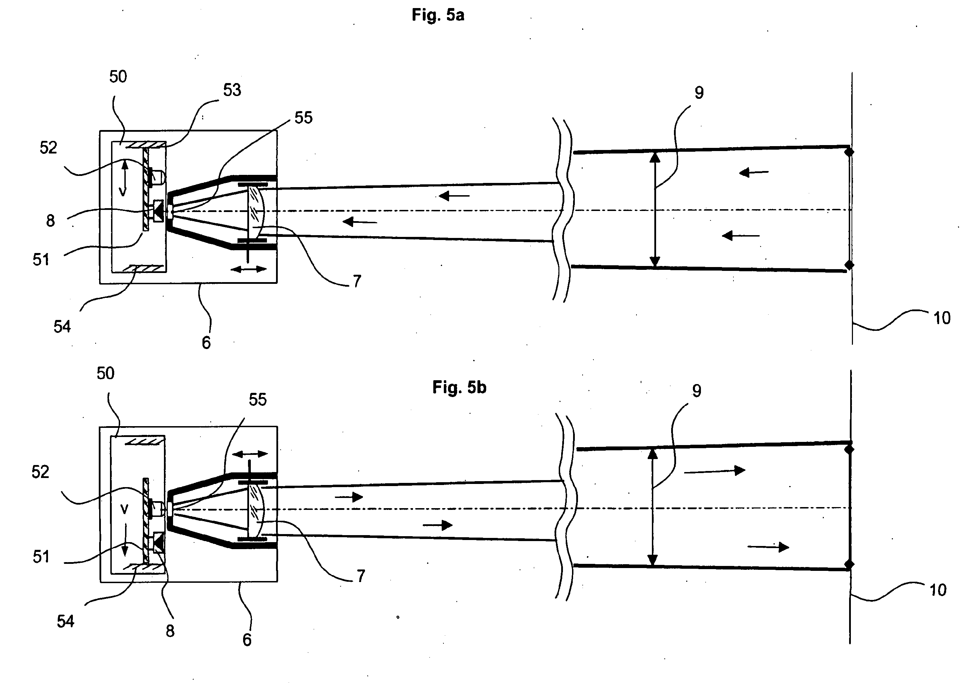

In den Figuren 5a und 5b wird diese Wechselvorrichtung 50 zur Ausrichtung der Kontrolllichtkeule 22 auf die Messlichtkeule 9 dargestellt. Da die Wechselvorrichtung 50 in der Messeinheit 6 und der Kontrolleinheit 20 prinzipiell gleichartig ausgeführt ist, wird die Wechselvorrichtung 50 in den Figuren 5a und 5b nur anhand der Messeinheit 6 erläutert. Aus der schematischen Querschnittsansicht ist zu erkennen, dass der Messempfänger 8 innerhalb der Wechselvorrichtung 50 auf einer Trägerplatte 51 aufgebracht ist. Neben dem Messempfänger 8 ist auf der Trägerplatte 51 eine Justierlichtquelle 52 angeordnet. Die Trägerplatte 51 ist innerhalb der Wechselvorrichtung 50 so gelagert, dass sie entlang einer Richtung V verschoben werden kann. Der mögliche Verschiebeweg wird durch die beiden Anschläge 53, 54 begrenzt.

In Figur 5a liegt die Trägerplatte 51 am Anschlag 53 an, so dass sich der Messempfänger 8 auf der optischen Achse des Objektivs 7 befindet. Daraus folgt, dass alles Licht, welches aus der Messlichtkeule 9 kommend auf das Objektiv 7 auftrifft, vom Messempfänger 8 erfasst wird.

Im Gegensatz zur Darstellung in Figur 5a ist in Figur 5b die Trägerplatte 51 entlang der Richtung V an den Anschlag 54 verschoben. Damit ist die Justierlichtquelle 52 auf der optischen Achse des Objektivs 7 positioniert. Die Messlichtkeule 9 hat damit von einer Lichtempfangsfunktion in eine Lichtsendefunktion gewechselt. Da die Justierlichtquelle 52 Licht im sichtbaren Wellenlängenbereich emittiert, ist der wirksame Strahlquerschnitt der Messlichtkeule 9 in der in Figur 5b gezeigten Situation für das menschliche Auge sichtbar. Dies bedeutet auch, dass der Auftreffort und der wirksame Querschnitt der Messlichtkeule 9 auf der Hintergrundebene 10 sichtbar ist.

Da wie bereits erwähnt, diese Wechselvorrichtung 50 auch in der Kontrolleinheit 20 vorhanden ist, ist neben der Messlichtkeule 9 auf gleiche Weise auch die Kontrolllichtkeule 22 für das menschliche Auge sichtbar. Eine Ausrichtung der Kontrolllichtkeule 22 auf die Messlichtkeule 9 über die Gelenkhalterung 30 ist damit leicht durchführbar. Bei dem Einsatz der Wechselvorrichtung 50 kann bedingt durch Bauteiltoleranzen nicht sichergestellt werden, dass der lichtemittierende Chip der Justierlichtquelle 52 räumlich nicht exakt gegen den photoempfindlichen Chip des Messempfängers 8 ausgetauscht wird. Eine räumliche Toleranz beim Wechsel von Messempfänger 8 und Justierlichtquelle 52 hat jedoch zur Folge, dass die Messlichtkeule 9 während der Lichtempfangsfunktion eine etwas andere Geometrie besitzt als in der Lichtsendefunktion. Die Folge davon ist, dass die Ausrichtung der Kontrolllichtkeule 22 auf die Messlichtkeule 9 nicht exakt durchgeführt werden kann. Um dies zu vermeiden, ist in unmittelbarer Nähe vor dem Messempfänger 8 beziehungsweise der Justierlichtquelle 52 eine feststehende Feldblende 55 angeordnet, die zur optischen Achse des Objektivs 7 justiert ist. Der Abstand der Feldblende 55 zum Objektiv 7 ist in Richtung der optischen Achse einstellbar, so dass ein exaktes Abbild der Feldblende 55 auf der Hintergrundebene 10 entsteht. Die Geometrie der Messlichtkeule 9 ist durch den Einbau der Feldblende 55 unabhängig von der Wechselvorrichtung 50, d. h. toleranzbedingte Abweichungen in der Geometrie der Messlichtkeule 9 sind damit ausgeschlossen.

### Bezugszeichenliste

- 1: Messvorrichtung
- 2: Messbereich
- 3: Gehäuse
- 4: Lichtsender
- 5: Lichtbündel
- 6: Messeinheit
- 7: Objektiv
- 8: Messempfänger
- 9: Messlichtkeule
- 10: Hintergrundebene
- 11: Lichtfalle
- 12: Blende
- 13: Oberfläche
- 20: Kontrolleinheit
- 21: Kontrollempfänger
- 22: Kontrolllichtkeule
- 23: Überdeckungsbereich
- 30: Gelenkhalterung
- 31: Einstellskalierung
- 40,41: Laserpointer
- 42, 43: Lichtspot
- 50: Wechselvorrichtung
- 51: Trägerplatte
- 52: Justierlichtquelle
- 53, 54: Anschläge
- 55: Feldblende
- D: Abstand
- S: Schnittbereich
- V: Richtung

## Patentansprüche

1. Messvorrichtung (1) zur Bestimmung einer Partikelkonzentration innerhalb eines Messbereichs (2), wobei innerhalb der Messvorrichtung (1) ein Lichtsender (4) zum Aussenden von einem Lichtbündel (5) in den Messbereich (2) angeordnet ist und in der Messvorrichtung (1) eine Messeinheit (6) mit einem Messempfänger (8) vorhanden, ist, die eine Messlichtkeule (9) aufweist, welche sich innerhalb des Messbereichs (2) mit dem Lichtbündel (5) überschneidet, so dass ein Anteil des an den Partikel im Messbereich (2) zurückgestreuten Lichtbündels in der Messeinheit (6) detektierbar ist, wobei in der Messvorrichtung (1) eine in unmittelbarer Nähe zur Messeinheit (6) angeordnete optische Kontrolleinheit (20) mit einem Kontrollempfänger (21) vorhanden ist und die Kontrolleinheit (20) zur Erfassung einer Hintergrundstrahlung mit einer Kontrolllichtkeule (22) ausgestattet ist, und wobei die Kontrolleinheit (20) so zur Messeinheit (6) ausgerichtet ist, dass sich der Querschnitt der Kontrolllichtkeule (22) und der Querschnitt der Messlichtkeule (9) in einer hinter dem Messbereich (2) liegenden Hintergrundebene (10) zumindest teilweise überdecken und sich die Kontrolllichtkeule (22) mit dem vom Lichtsender (4) ausgesandten Lichtbündel (5) im gesamten Strahlverlauf nicht überschneiden, **dadurch gekennzeichnet, dass** die Messvorrichtung (1) nach dem Rückwärtsstreulichtprinzip arbeitet und dass zur Justage der Messvorrichtung bei Inbetriebnahme oder bei Servicearbeiten in der Messeinheit und in der Kontrolleinheit eine Wechselvorrichtung eingebaut ist, mit der der Messempfänger und der Kontrollempfänger jeweils durch eine Justierlichtquelle getauscht werden können, so dass der wirksame Strahlquerschnitt der Kontrolllichtkeule und der Messlichtkeule für das menschliche Auge sichtbar ist.

2. Messvorrichtung nach Anspruch 1, **dadurch gekennzeichnet, dass** in der Messvorrichtung eine Gelenkhalterung vorhanden ist, mit der die Kontrolleinheit mit veränderbarer Winkelausrichtung in der Messvorrichtung befestigbar ist, so dass bei unterschiedlichen Entfernungen zwischen der Hintergrundebene und der Messvorrichtung der Überschneidungsgrad von Kontrolllichtkeule mit der Messlichtkeule einstellbar ist.

3. Messvorrichtung nach Anspruch 2, **dadurch gekennzeichnet, dass** an der Gelenkhalterung eine Einstellskalierung angebracht ist, mit der die Winkelausrichtung zwischen der Kontrolleinheit und der Messeinheit in Abhängigkeit vom Abstand zur Hintergrundebene durchführbar ist.

4. Messvorrichtung nach einem der vorhergehenden Ansprüche, **dadurch gekennzeichnet, dass** zur Vermeidung von toleranzbedingten Justagefehlern in der Wechselvorrichtung vor dem Messempfänger und vor dem Kontrollempfänger eine feststehende Feldblende angeordnet ist, deren Position sich auch beim Tausch der Empfänger mit den Justierlichtquellen nicht verändert.

5. Verfahren zur Bestimmung einer Partikelkonzentration innerhalb eines Messbereichs nach dem Rückwärtsstreulichtprinzip mit einer Vorrichtung nach einem der vorhergehenden Ansprüche, wobei mit der optischen Kontrolleinheit nur die Größe der Hintergrundstrahlung gemessen und mit dem Messlichtempfänger die Größe des an den Partikel im Messbereich zurückgestreuten Lichts inklusive der überlagerten Hintergrundstrahlung erfasst wird und wobei in einer Auswerteeinheit aus beiden Größen die Partikelkonzentration im Messbereich bestimmt wird, wobei mittels des für das menschliche Auge sichtbaren wirksamen Strahlquerschnitts die Messvorrichtung bei Inbetriebnahme oder bei Servicearbeiten in der Messeinheit justiert wird.

## Claims

1. A measurement apparatus (1) for the determination of a particle concentration within a measurement zone (2), wherein a light transmitter (4) for the transmission of a light beam (5) into the measurement zone (2) is arranged within the measurement apparatus and a measurement unit (6) with a measurement receiver (8) is present in the measurement apparatus (1) and has a measurement light lobe (9) which overlaps the light beam (5) within the measurement zone (2) so that a portion of the light beam scattered back at the particles in the measurement zone (2) can be detected in the measurement unit (6), wherein an optical control unit (20) arranged in direct proximity to the measurement unit (6) and having a control receiver (21) is present in the measurement apparatus (1) and the control unit (20) is equipped with a control light lobe (22) for the detection of a background radiation, and wherein the control unit (20) is aligned with respect to the measurement unit (6) so that the cross-section of the control light lobe (22) and the cross-section of the measurement light lobe (9) cover one another at least partly in a background plane (10) disposed after the measurement region (2) and the control light lobe (22) does not overlap the light beams (5) transmitted by the light transmitter (4) in the total extent of the beam, **characterised in that** the measurement apparatus (1) works in accordance with the backscattered light principle; and **in that** a replacement apparatus with which the measurement receiver and the control receiver can each be exchanged in the measurement unit and in the control unit for an adjustment light source for the adjustment of the measurement apparatus during commissioning or during service work so that the effective beam cross-section of the control light lobe and of the measurement light lobe is visible to the human eye.

2. A measurement apparatus in accordance with claim 1, **characterised in that** a jointed holder is present in the measurement device and the control unit can be fastened by said jointed holder in the measurement apparatus with changeable angular alignment so that the degree of overlap of the control light lobe with the measurement light lobe can be set on different distances between the background plane and the measurement apparatus.

3. A measurement apparatus in accordance with claim 2, **characterised in that** an adjustment scale is attached to the jointed holder and the angular alignment between the control unit and the measurement unit can be carried out using said adjustment scale in dependence on the spacing from the background plane.

4. A measurement apparatus in accordance with any one of the preceding claims, **characterised in that** a stationary field diaphragm whose position also does not change on an exchange of the receivers with the adjustment light sources is arranged in front of the measurement receiver and in front of the control receiver to avoid tolerance-induced adjustment errors in the replacement apparatus.

5. A method for the determination of a particle concentration within a measurement zone in accordance with the backscattered light principle having an apparatus in accordance with any one of the preceding claims, wherein only the magnitude of the background radiation is measured using the optical control unit and the magnitude of the light scattered back at the particles in the measurement zone including the superimposed background radiation is detected using the measurement light receiver and wherein the particle concentration in the measurement zone is determined from both magnitudes in an evaluation unit, with the measurement apparatus being adjusted by means of the effective beam cross-section visibly to the human eye during commissioning or during service work in the measurement unit.

## Revendications

1. Dispositif de mesure (1) pour déterminer une concentration de particules à l'intérieur d'une zone de mesure (2), dans lequel un émetteur de lumière (4) est agencé à l'intérieur du dispositif de mesure (1) pour émettre un faisceau lumineux (5) dans la zone de mesure (2), et une unité de mesure (6) avec un récepteur de mesure (8) est présente dans le dispositif de mesure (1), laquelle présente un lobe lumineux de mesure (9) qui recoupe le faisceau lumineux (9) à l'intérieur de la zone de mesure (2), de sorte qu'une part du faisceau lumineux rétrodiffusé au niveau des particules dans la zone de mesure (2) est susceptible d'être détectée dans l'unité de mesure (6), dans lequel une unité de contrôle optique (20) avec un récepteur de contrôle (21) est prévue dans le dispositif de mesure (1) et agencée au voisinage immédiat de l'unité de mesure (6), et l'unité de contrôle (20) est dotée d'un lobe lumineux de contrôle (22) pour la détection d'un rayonnement d'arrière-plan, et dans lequel l'unité de commande (20) est orientée vers l'unité de mesure (6) de telle façon que la section du lobe lumineux de contrôle (22) et la section transversale du lobe lumineux de mesure (9) se recouvrent au moins partiellement dans un plan d'arrière-plan (10) situé en arrière de la zone de mesure (2), et le lobe lumineux de contrôle (22) ne recoupe pas le faisceau lumineux ne (5) émis par l'émetteur de lumière (4) sur la totalité du tracé du rayonnement,
**caractérisé en ce que** le dispositif de mesure (1) fonctionne suivant le principe de la lumière rétrodiffusée, et **en ce que** pour ajuster le dispositif de mesure lors de la mise en service ou lors de travaux d'entretien dans l'unité de mesure et dans l'unité de contrôle, il est prévu un dispositif d'échange au moyen duquel le récepteur de mesure et le récepteur de contrôle peuvent être respectivement échangés par une source lumineuse d'ajustement, de sorte que la section de rayonnement efficace du lobe lumineux de contrôle et du lobe lumineux de mesure est visible pour l'oeil humain.

2. Dispositif de mesure selon la revendication 1, **caractérisé en ce qu'**une monture articulée est prévue dans le dispositif de mesure, avec laquelle l'unité de contrôle est susceptible d'être fixée dans le dispositif de mesure avec une orientation angulaire modifiable, de sorte que pour des éloignements différents entre le plan d'arrière-plan et le dispositif de mesure, le degré de recoupement du lobe lumineux de contrôle et du lobe lumineux de mesure est réglable.

3. Dispositif de mesure selon la revendication 2, **caractérisé en ce qu'**une échelle de réglage est appliquée sur la monture articulée, au moyen de laquelle l'orientation angulaire entre l'unité de contrôle et l'unité de mesure peut être exécutée en fonction de la distance par rapport au plan d'arrière-plan.

4. Dispositif de mesure selon l'une des revendications précédentes, **caractérisé en ce que**, pour éviter les erreurs d'ajustement dues aux tolérances dans le dispositif d'échange, un diaphragme de champ stationnaire est agencé devant le récepteur de mesure et devant le récepteur de contrôle, dont la position ne varie pas également lors de l'échange du récepteur avec la source lumineuse d'ajustement.

5. Procédé pour déterminer une concentration de particules à l'intérieur d'une zone de mesure, selon le principe de lumière rétrodiffusée, avec un dispositif selon l'une des revendications précédentes, dans lequel on mesure avec l'unité de contrôle optique uniquement l'intensité du rayonnement d'arrière-plan et l'on détecte au moyen du récepteur de lumière de mesure l'intensité de la lumière rétrodiffusée au niveau des particules dans la zone de mesure, y compris le rayonnement d'arrière-plan superposé, et dans lequel on détermine dans une unité d'évaluation à partir des deux intensités la concentration en particules dans la zone de mesure, et dans lequel le dispositif de mesure est ajusté lors de la mise en service ou lors de travaux d'entretien dans l'unité de mesure au moyen de la section de rayonnement efficace visible pour l'oeil humain.
